**Europäisches Patentamt**

**European Patent Office**

**Office européen des brevets**

(19)

(11) Veröffentlichungsnummer: **0 182 073**
**B1**

(12) # EUROPÄISCHE PATENTSCHRIFT

(45) Veröffentlichungstag der Patentschrift:
**20.04.88**

(21) Anmeldenummer: **85112831.4**

(22) Anmeldetag: **10.10.85**

(51) Int. Cl.⁴: **F 02 D 19/02,** F 02 D 41/14,
F 02 D 35/00, F 02 D 33/02,
F 02 D 41/26

(54) **Verfahren zur Regelung der Schadstoffreduzierung bei Gasmotoren.**

(30) Priorität: **13.11.84 DE 3441390**

(43) Veröffentlichungstag der Anmeldung:
**28.05.86 Patentblatt 86/22**

(45) Bekanntmachung des Hinweises auf die Patenterteilung:
**20.04.88 Patentblatt 88/16**

(84) Benannte Vertragsstaaten:
**AT CH DE FR LI NL**

(56) Entgegenhaltungen:
**EP - A - 0 036 394**
**EP - A - 0 134 672**
**DE - A - 3 231 122**
**FR - A - 2 163 256**
**US - A - 4 458 319**

(73) Patentinhaber: **M A N Technologie GmbH, Dachauer Strasse 667, D-8000 München 50 (DE)**

(72) Erfinder: **Kleeblatt, Herbert, Wotanstrasse 2, D-8034 Germering (DE)**

**Beschreibung**

Die Erfindung betrifft ein Verfahren zur Regelung der Schadstoffreduzierung bei Gasmotoren gemäss Oberbegriff des Anspruches 1.

Die vorgenannte bekannte Methode der katalytischen Schadstoffreduzierung setzt voraus, dass das Luft-Brennstoff-Verhältnis λ auf einen Wert kleiner 1 eingestellt und möglichst im gesamten Lastbereich des Gasmotors konstant gehalten wird. Als Sensor dient eine Lambda-Sonde. Die Spannung der Lambda-Sonde ist nur für einen bestimmten Punkt, z.B. Lambda = 1, genau definiert. In allen anderen Punkten, also auch in dem hier interessierenden Betriebspunkt Lambda = kleiner 1, gibt es keine exakte Zuordnung mehr zwischen Luftbrennstoff-Verhältnis und Sondenspannung. Eine konventionelle Regelung mit der Sondenspannung als Regelgrösse reicht hier nicht mehr aus.

Dieser Nachteil kann durch eine Regelung umgangen werden, die sich gelegentlich am Bezugspunkt λ = 1 orientiert. Hierzu wird in regelmässigen, zeitlichen Abständen das Stellglied betätigt, bis die Lambda-Sonde ein Luft-Brennstoff-Verhältnis λ = 1 feststellt. Anschliessend reichert man das Gemisch um einen konstanten Verstellschritt wieder an und erreicht so das gewünschte Luft-Brennstoff-Verhältnis unabhängig von der momentanen Spannung der Lambda-Sonde. Das Stellglied zur Beeinflussung des Luft-Brennstoff-Verhältnisses wird dann in seiner neuen Position festgehalten, bis eine neue Bezugspunktsuche durchgeführt wird, mit anschliessender Anreicherung um den konstanten Schritt. Dieses Verfahren ist Stand der Technik und bei gebauten Gasmotoren angewandt. Es hat den Nachteil, dass in der Zeit von Bezugspunktsuche zu Bezugspunktsuche Störgrössen nicht ausgeregelt werden können.

Bei dem aus der EP 0 134 672 A2 bekannten Regelungsverfahren wird ein Vergaser grundsätzlich so mit Brennstoff und Luft versorgt, dass die Maschine mit einem Luft-Brennstoff-Verhältnis von λ < 1 betrieben wird. Die dortige Regelung zielt darauf ab, das Luft-Brennstoff-Gemisch ausgehend von diesem λ in Richtung magereres Gemisch zu ändern. Dabei wird eine Lambda-Sonde als Sensor zur Bestimmung der Sondenspannung als Regelgrösse verwendet, die zumindest anfänglich, das heisst, in betriebsneuem Zustand bei einem Luft-Brennstoff-Verhältniss λ < 1, z.B. 0,995, eine bestimmte Sondenspannung von beispielsweise 850 mV erzeugt, welche als Regelungsbezugsbasis dient. Bei der Regelung selbst wird in regelmässigen zeitlichen Abständen ein Stellglied betätigt, mit dem das Luft-Brennstoff-Gemisch veränderbar ist, solange, bis die Lambda-Sonde ein Luft-Brennstoff-Verhältnis λ > 1 feststellt. Die gesamte Regelung ist darauf abgestellt, Spannungsänderungen, die sich durch Alterung der Lambda-Sonde ergeben, entsprechend zu berücksichtigen, um immer eine bestimmte Bezugsbasis für die besagte Regelung zu haben. Nach dem Einregeln des Luft-Brennstoff-Gemisches auf λ > 1 wird die sich dabei einstellende Sondenspannung gemessen und gespeichert und vom Regelkreis nach Addition eines Parameters als Sollwert verwendet, der für spätere Nachregelungen als Bezugsbasis dient.

Aufgabe der Erfindung ist die Schaffung eines Regelverfahrens zur Schadstoffreduzierung bei Gasmotoren der eingangs genannten Art, das gegenüber dem vorgenannten bekannten Verfahren verbessert ist und bei dem insbesondere auf einfache Weise Störgrössen ausgeregelt werden können.

Gelöst wird die der Erfindung zugrundeliegende Aufgabe durch die im kennzeichnenden Teil des Anspruches 1 angegebenen Mittel.

Das erfindungsgemässe Regelungsverfahren orientiert sich auch am Bezugspunkt Lambda = 1 und reichert das Gemisch nach dem Auffinden dieses Punktes um einen bestimmten Schritt an. Dann wird die momentane Sondenspannung gespeichert und von einem Regelkreis als Sollwert verwendet, der das Stellglied zur Einstellung des Luftverhältnisses so beeinflusst, dass die Sondenspannung konstant auf diesem Sollwert gehalten wird. Diese Regelung reagiert sofort auf eine Störgrösse und muss nicht warten, bis eine erneute Bezugspunktsuche durchgeführt wird. Ausgenutzt wird hier die Tatsache, dass sich die Zuordnung von Luft-Brennstoff-Verhältnis und Sondenspannung nur relativ langsam ändert.

Vorteilhafte Ausführungsformen sind in den Unteransprüchen angeführt.

Die Erfindung wird nachfolgend anhand eines Ausführungsbeispiels unter Bezugnahme auf die beigefügte Zeichnung näher erläutert. Es zeigen:

Fig. 1 in schematischer Darstellung einen erfindungsgemässen Regelkreis, und

Fig. 2 den Logikplan der Erfindung nach Fig. 1.

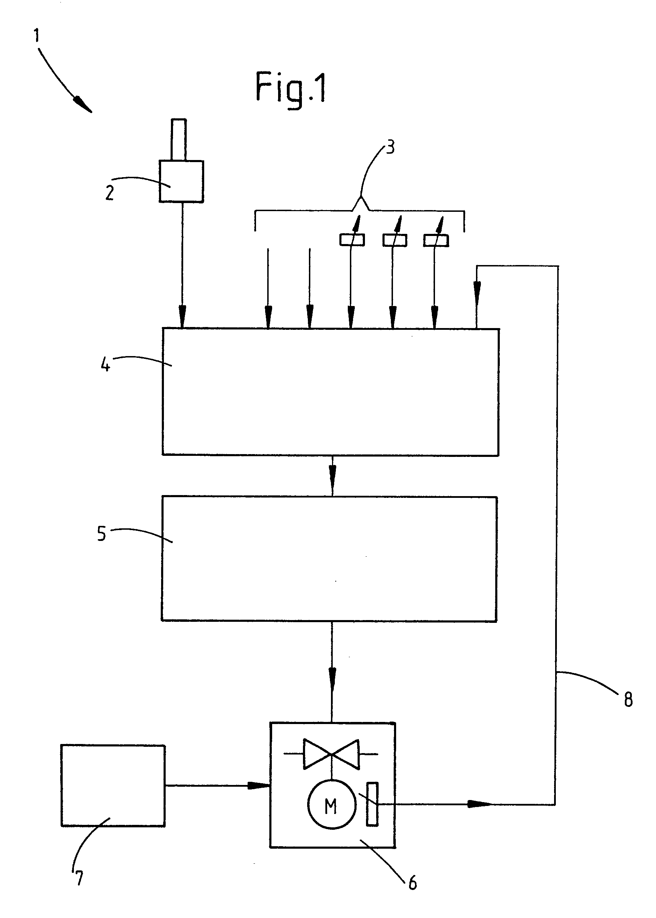

Der Regelkreis 1 gemäss Fig. 1 umfasst insbesondere eine Lambda-Sonde 2 als Sensor, einen Analog/Digital-Wandler 4 mit mehreren zusätzlichen Eingängen 3, einen Mikrocomputer 5, ein durch einen Motor M betriebenes Stellglied 6 zur Gemischkorrektur mit nachgeschaltetem Rückmeldepotentiometer, das über eine Leitung 8 mit einem Eingangs 3 des Analog/Digital-Wandlers 4 verbunden ist, in der eine Rückmeldung der Ventilstellung stattfindet, und gegebenenfalls ein Handstellglied 7 zur Betätigung des Stellgliedes 6 von Hand.

Die Spannung der Lambda-Sonde 2 wird über den Analog/Digital-Wandler 4 dem Mikrocomputer 5 zugeführt.

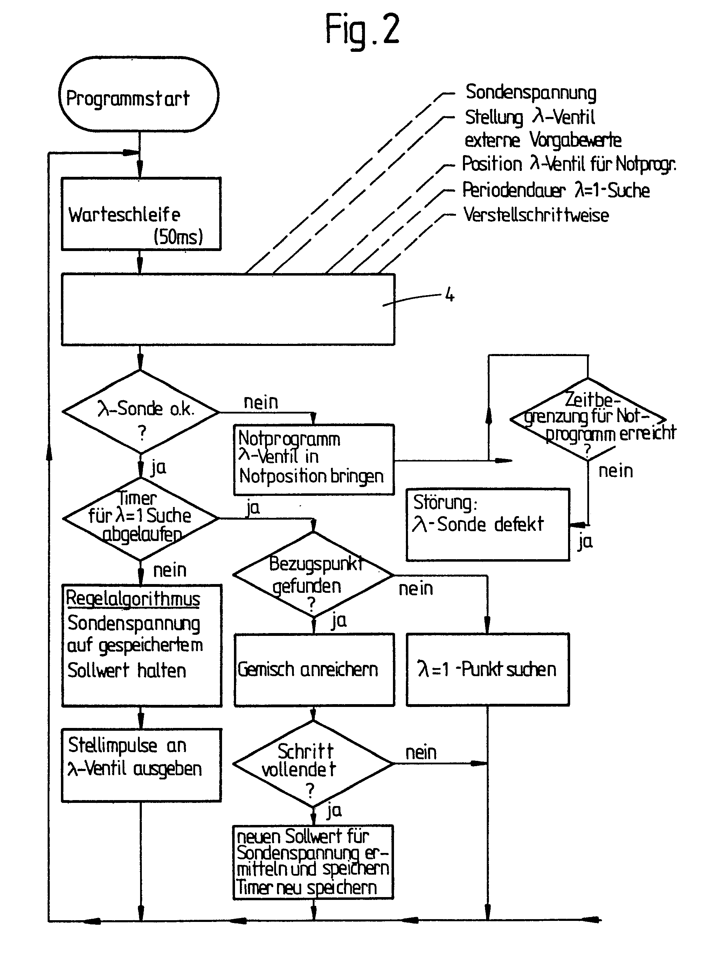

Die Auswertung und Regelung erfolgt durch ein entsprechendes Programm, dessen Logikplan in Fig. 2 dargestellt ist.

Das elektromotorisch betriebene Ventil des Stellglieds 6 lässt sich mit TTL-Pegel direkt vom Mikrocomputer 5 auf- und zusteuern. Das Ventil gemäss Ausführungsbeispiel ist mit einem Rückmeldepotentiometer versehen. Die Information über die Ventilstellung gelangt über den Analog/Digital-Wandler 4 in den Mikrocomputer 5 und kann dort für ein «Notprogramm» ausgewertet werden.

Die Ventilsteuerung kann auch eine Möglichkeit zur Handverstellung durch ein Handstellglied 7 besitzen.

Gemäss Fig. 1 besitzt der Wandler 4 sieben Eingänge 3, wodurch vorteilhaft verschiedene Parameter mit einfachen Potentiometern verändert werden können. Ausserdem lassen sich bei Bedarf weitere Eingangsgrössen in die Regelung mit einbeziehen, beispielsweise neben der Sondenspannung und der Stellung des Stellglied-Ventils externe Vorgabewerte wie die Position des Stellglied-Ventils für ein Notprogramm, die Periodendauer für eine Lambda = 1-Suche oder die Verstellschrittweite (vgl. Fig. 2).

## Patentansprüche

1. Verfahren zur Regelung der Schadstoffreduzierung bei Gasmotoren, mit einer nur für ein bestimmtes Luft-Brennstoff-Verhältnis $\lambda$ eine genau definierte Spannung erzeugenden Lambda-Sonde als Sensor zur Bestimmung der Sondenspannung als Regelgrösse, wobei grundsätzlich das Luft-Brennstoff-Verhältnis auf einen Wert von kleiner 1 eingestellt und möglichst im gesamten Lastbereich des Gasmotors konstant gehalten wird, ferner insbesondere in regelmässigen, zeitlichen Abständen ein Stellglied betätigt wird, bis die Lambda-Sonde ein Luft-Brennstoff-Verhältnis von 1 feststellt und anschliessend das Gemisch um einen konstanten Verstellschritt wieder angereichert wird, bis sich das gewünschte Luft-Brennstoff-Verhältnis $\lambda$ einstellt, dadurch gekennzeichnet, dass nach dem Verstellschritt die momentane Spannung der Lambda-Sonde gemessen und gespeichert und vom Regelkreis (1) als Sollwert verwendet wird, der das Stellglied (6) zur Einstellung des gewünschten Luft-Brennstoff-Verhältnisses $\lambda$ so beeinflusst, dass die Spannung der Lambda-Sonde konstant auf diesem Sollwert gehalten wird.

2. Verfahren nach Anspruch 1, dadurch gekennzeichnet, dass die Spannung der Lambda-Sonde über einen Analog/Digital-Wandler (4) einem Mikrocomputer (5) zugeführt wird.

3. Verfahren nach Anspruch 2, dadurch gekennzeichnet, dass der Analog/Digital-Wandler (4) mehrere Eingänge (3) besitzt.

4. Verfahren nach Anspruch 1 bis 3, dadurch gekennzeichnet, dass als Stellglied (6) zur Gemischkorrektur ein elektromotorisch betriebenes Ventil M verwendet wird, das sich direkt vom Mikrocomputer (5) auf- und zusteuern lässt.

5. Verfahren nach Anspruch 4, dadurch gekennzeichnet, dass das Stellglied (6) mit einem Rückmeldepotentiometer verbunden ist.

## Claims

1. A method for adjusting the emission of pollutants by gas engines, comprising a lambda probe generating an exactly defined voltage at only one specific air-fuel rate $\lambda$ and used as a sensor for determining the probe voltage for use as a regulating variable, the air-fuel ratio basically being adjusted to a value below unity and being kept substantially constant over the entire load range of the gas engine, and an actuator is operated, more particularly at regular intervals, until the lambda probe detects an air-fuel ratio of unity and the mixture is subsequently enriched by a constant adjustment step until the desired air-fuel ratio $\lambda$ is reached, characterised in that after the adjustment step the instantaneous voltage of the lambda probe is measured and stored und used as a set value by the control loop (1) which influences the actuator (6) in order to obtain the desired air-fuel ratio $\lambda$ so that the voltage of the lambda probe is kept constant at the set value.

2. A method according to claim 1, characterised in that the voltage of the lambda probe is supplied via an analog/digital converter (4) to a mikrocomputer (5).

3. A method according to claim 2, characterised in that the analog/digital converter (4) has a number of inputs (3).

4. A method according to claims 1 to 3, characterised in that the actuator (6) for adjusting the mixture is an electromotor-driven valve (M) which can be directly started and stopped by the microcomputer (5).

5. A method according to claim 4, characterised in that the actuator (6) is connected to a feedback potentiometer.

## Revendications

1. Procédé de régulation pour la réduction des matières nocives émises par des moteurs à gaz à l'aide d'une sonde lambda produisant une tension définie avec précision seulement pour un rapport air-carburant déterminé comme détecteur pour la détermination de la tension de sondage en tant que paramètre de régulation, selon lequel fondamentalement, le rapport air-carburant est réglé à une valeur inférieure à 1 et est maintenu le plus possible constant dans la totalité du domaine de charge du moteur à gaz, un organe de régulation est actionné en outre à des intervalles de temps réguliers jusqu'à ce que la sonde lambda décèle un rapport air-carburant de 1, et qu'ensuite le mélange soit enrichi à nouveau à un niveau de réglage jusqu'à l'obtention du rapport air-gaz désiré, caractérisé en ce qu'en fonction du niveau de réglage, on mesure la tension instantanée de la sonde lambda et on la transmet et on l'utilise à partir du circuit de régulation (1) comme valeur de consigne qui s'agit sur le rapport air-carburant désiré, de sorte que la tension de la sonde lambda soit maintenue constamment à cette valeur de consigne.

2. Procédé selon la revendication 1, caractérisé en ce que la tension de la sonde lambda est transmise à un microcalculateur (5) par l'intermédiaire d'un convertisseur analogique-numérique (4).

3. Procédé selon la revendication 2, caractérisé en ce que le convertisseur analogique-numérique (4) possède plusieurs entrées (3).

4. Procédé selon les revendications 1 à 3, caractérisé en ce que comme organe de régulation pour la correction du mélange, on utilise une soupape entraînée par un moteur électrique (M) qui peut être commandé dans un sens ou dans l'autre directement à partir du microcalculateur (6).

5. Procédé selon la revendication 4, caractérisé en ce que l'organe de régulation (6) est relié à un potentiomètre de retour.

# Fig.1

# Fig.2

Programmstart

Warteschleife
(50ms)

Sondenspannung
Stellung λ-Ventil
externe Vorgabewerte
Position λ-Ventil für Notprogr.
Periodendauer λ=1-Suche
Verstellschrittweise

4

λ-Sonde o.k. ? — nein → Notprogramm λ-Ventil in Notposition bringen → Zeitbe- grenzung für Not- programm erreicht ? — nein

ja

Timer für λ=1 Suche abgelaufen — ja → Bezugspunkt gefunden ? — nein → λ=1 -Punkt suchen

Störung: λ-Sonde defekt

ja

nein

Regelalgorithmus
Sondenspannung auf gespeichertem Sollwert halten

ja → Gemisch anreichern

Stellimpulse an λ-Ventil ausgeben

Schritt vollendet ? — nein

ja

neuen Sollwert für Sondenspannung er- mitteln und speichern Timer neu speichern